(19) Europäisches Patentamt
European Patent Office
Office européen des brevets

(11) Veröffentlichungsnummer : **0 187 916**
**B1**

(12) # EUROPÄISCHE PATENTSCHRIFT

(45) Veröffentlichungstag der Patentschrift : **01.02.89**

(21) Anmeldenummer : **85114614.2**

(22) Anmeldetag : **18.11.85**

(51) Int. Cl.⁴ : **C 09 B 67/48**, C 09 B 67/10, C 09 B 67/22, C 09 B 29/36, D 06 P 1/18, D 06 P 3/84

(54) **Färbestabile Modifikation eines Dispersionsfarbstoffs, Verfahren zu ihrer Herstellung und Verwendung.**

(30) Priorität : **22.12.84 DE 3447117**

(43) Veröffentlichungstag der Anmeldung : **23.07.86 Patentblatt 86/30**

(45) Bekanntmachung des Hinweises auf die Patenterteilung : **01.02.89 Patentblatt 89/05**

(84) Benannte Vertragsstaaten : **CH DE FR GB IT LI**

(56) Entgegenhaltungen :
**EP–A– 0 023 718**
**FR–A– 2 362 899**
**GB–A– 2 090 852**
**US–A– 2 007 382**

(73) Patentinhaber : **CASSELLA Aktiengesellschaft**
**Hanauer Landstrasse 526**
**D-6000 Frankfurt am Main 61 (DE)**

(72) Erfinder : **Tappe, Horst, Dr.**
**Ringstrasse 9**
**D-6057 Dietzenbach (DE)**
Erfinder : **Hofmann, Klaus**
**Meerholzer Strasse 50**
**D-6000 Frankfurt am Main 61 (DE)**
Erfinder : **Opitz, Konrad, Dr.**
**Schwedenstrasse 22**
**D-6237 Liederbach (DE)**
Erfinder : **Schneider, Manfred**
**Cuntzstrasse 1**
**D-6239 Eppstein/Taunus (DE)**

(74) Vertreter : **Urbach, Hans-Georg, Dr. et al**
**Hanauer Landstrasse 526**
**D-6000 Frankfurt am Main 61 (DE)**

**EP 0 187 916 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die färbestabile β-Modifikation des Farbstoffs der Formel I

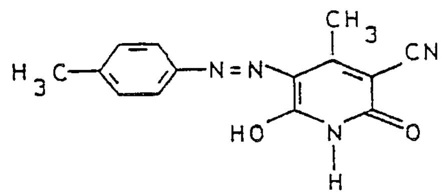

(I)

mit dem Röntgenbeugungsdiagramm für Kupfer-Kα-Strahlung mit folgenden Linien starker Intensität bei Beugungswinkel 2 θ von 13,40° ; Linien mittlerer Intensität bei Beugungswinkel 2 θ von 9,20° ; 11,15° und 25,80° ; Linien geringer Intensität bei Beugungswinkel 2 θ von 14,70°, 15,70° ; 21,65°, 25,00°, 26,85°, 28,05° und 29,10°.

Die Erfindung betrifft ferner ein Verfahren zur Herstellung der färbestabilen β-Modifikation des Farbstoffs I und ihre Verwendung als Einzelfarbstoff und in Mischungen mit anderen Farbstoffen, insbesondere in Mischung mit den Farbstoffen C.I. Disperse Yellow 54 und/oder 64 zum Färben und Bedrucken von synthetischem, hydrophobem Fasermaterial und Gemischen dieser Fasermaterialien mit Cellulosefasern.

Der Farbstoff der Formel I wird, wie in Beispiel 1 der DE-OS-29 31 847 beschrieben, durch Diazotieren von p-Toluidin in wäßriger Salzsäure mit Natriumnitrit und anschließendes Kuppeln auf 3-Cyan-4-methyl-6-hydroxy-2-pyridon erhalten. Dabei fällt die färbeinstabile α-Modifikation an, die unter den in der Färbepraxis auftretenden Bedingungen nicht genügend stabil ist.

Die färbeinstabile α-Modifikation des Farbstoffs I besitzt im Röntgenbeugungsdiagramm für Cu-Kα-Strahlung folgende Linien : Linien starker Intensität bei einem Beugungswinkel 2 θ von 4,50° ; 13,25° und 26,60° ; Linien mittlerer Intensität bei Beugungswinkel 2 θ von 6,15° ; 6,55° ; 7,45° ; 9,00° ; 12,15° ; 13,95° ; 25,55° ; 26,15° und 27,45° ; und Linien geringer Intensität bei Beugungswinkel 2 θ von 10,35° ; 10,85° ; 15,80° ; 18,05° ; 19,75° ; 29,40° und 31,30°.

Die für die färbestabile β-Modifikation und färbeinstabile α-Modifikation des Farbstoffs I angegebenen Linien des Röntgenbeugungsdiagramms sind mit einem rechnergesteuerten Pulverdifraktometer der Firma Siemens, Typ Diffrac 11, mit Kupfer-Kα-Strahlung (λ = 1,54051, Kathodenspannung 40 KV, Kathodenstrom 32 mA) aufgenommen worden. Die Fehlergrenze für die Beugungswinkel 2 θ beträgt 0,05°.

Es ist möglich und sogar wahrscheinlich, daß die färbestabile β-Modifikation des Farbstoffs der Formel I in einer anderen tautomeren Form, insbesondere der Hydrazonform, oder mehreren anderen tautomeren Formen vorliegt. Auf diesen Umstand wird in der nachfolgenden Beschreibung, Beispielen und den Ansprüchen nicht mehr besonders hingewiesen.

Die färbeinstabile α-Modifikation des Farbstoffs der Formel I wird in die färbestabile β-Modifikation durch Erhitzen auf Temperaturen von 50 bis 150 °C, vorzugsweise 80 bis 140 °C, ganz besonders bevorzugt 90 bis 120 °C, überführt. Dieses Erhitzen kann in verschiedener Weise durchgeführt werden. Möglich ist. z. B. das Erhitzen in Substanz, z. B. in einem Trockenschrank. In der Regel wird jedoch die färbeinstabile α-Modifikation in einer Flüssigkeit oder einem Flüssigkeitsgemisch suspendiert und in Form der so erhaltenen Suspension, zweckmäßigerweise unter Rühren, auf die genannten Temperaturen erhitzt. Als Flüssigkeiten für die Herstellung dieser Suspensionen sind neben Wasser organische Lösungsmittel geeignet, in denen der Farbstoff in geringem Ausmaß löslich ist. Normalerweise werden solche organische Lösungsmittel verwendet, in denen der Farbstoff in Mengen von 0,02 bis 5 g/l löslich ist. Bevorzugte organische Lösungsmittel für die Herstellung der Suspension sind solche, in denen der Farbstoff in Mengen von 0,1 bis 1 g/l löslich ist. Zur Herstellung der Suspension kann eine Flüssigkeit (Wasser oder organisches Lösungsmittel) allein verwendet werden, es können jedoch auch Gemische verschiedener Flüssigkeiten zum Einsatz kommen. Falls hierbei ein oder mehrere organische Lösungsmittel im Gemisch mit Wasser verwendet werden, können die organischen Lösungsmittel in Wasser unlöslich, teilweise löslich oder löslich sein. Die Farbstoffsuspensionen können daher als Zweiphasensysteme (1 feste und 1 flüssige Phase) oder als Dreiphasensysteme (1 feste und 2 flüssige Phasen) vorliegen.

Es ist zweckmäßig, den pH-Wert einer wäßrigen Suspension auf 6 bis 9, vorzugsweise 7,0 bis 8,0, einzustellen. Diese pH-Einstellung erfolgt in an sich bekannter Weise, z. B. durch Zugabe einer geeigneten anorganischen oder organischen Säure oder Base. Vorzugsweise wird direkt die Farbstoffsuspension eingesetzt, die bei der Synthese des Farbstoffs durch Diazotierung und Kupplung nach beendeter Kupplung anfällt. Der zu erhitzenden Suspension werden gegebenenfalls Dispergiermittel und/oder Emulgatoren und/oder Lösungsmittel zugesetzt. Wenn auf Temperaturen erhitzt wird, die über dem Siedepunkt der flüssigen Phase liegen, ist die Anwendung von Überdruck erforderlich. Das Erhitzen

wird solange durchgeführt, bis die α-Modifikation in die β-Modifikation umgewandelt worden ist, was in der Regel 1 bis 10 Stunden dauert. Die Umwandlung kann röntgenographisch oder mikroskopisch an entnommenen Proben verfolgt werden.

Geeignete Dispergiermittel sind zum Beispiel Kondensationsprodukte aus Naphthalinsulfonsäure und Formaldehyd oder aus Phenol, Formaldehyd und Natriumbisulfit, Ligninsulfonate oder Sulfitcelluloseablauge oder andere anionische oder nichtionische oberflächenaktive Verbindungen. Geeignete nichtionogene Dispergiermittel sind z. B. Umsetzungsprodukte von Alkylenoxiden, wie z. B. Ethylen- oder Propylenoxid mit alkylierbaren Verbindungen, wie z. B. Fettalkoholen, Fettsäuren, Phenolen, Alkylphenolen oder Carbonsäureamiden. Weitere anionaktive Dispergiermittel sind beispielsweise Alkyl- oder Alkylarylsulfonate oder Alkylaryl-polyglykolethersulfate.

Geeignete Lösungsmittel sind z. B. Ketone, wie Methylethylketon, oder Alkohole, wie z. B. Ethanol, n-Propanol, i-Propanol, n-Butanol, i-Butanol, sec.-Butanol, tert.-Butanol, Pentanole oder Glykole, insbesondere Diethylenglykol, oder chlorierte Kohlenwasserstoffe, insbesondere Chlorbenzol.

Das Erhitzen kann auch so durchgeführt werden, daß dabei die färbeinstabile α-Modifikation aus einem geeigneten Lösungsmittel, vorzugsweise Chlorbenzol, umkristallisiert wird. Der umkristallisierte Farbstoff stellt dann die färbestabile β-Modifikation dar. Diese Methode ist besonders zeitsparend, weil dabei kein längeres Erhitzen auf die genannten Temperaturen erforderlich ist.

Das Erhitzen kann auch im Verlauf der üblichen Überführung des Farbstoffs in eine hohe Feinverteilung vorgenommen werden. Die färbeinstabile α-Modifikation wird dabei, vorzugweise unter Zusatz von nichtionogenen oder anionaktiven Dispergiermitteln, für die Beispiele bereits genannt wurden, sowie gegebenenfalls anderen üblichen Zusätzen (wie z. B. Staubschutz-, Frostschutz-, Netzmittel, Austrocknungsverhinderer etc.) naß auf üblichen Vorrichtungen, wie z. B. Mühlen oder Kneter, der Einwirkung von Scherkräften ausgesetzt und dabei in eine feindisperse Form überführt. Geeignet Mühlen sind z. B. Kugel-, Schwing-, Perl-, Sandmühlen. Wenn die Überführung des Farbstoffs in eine feindisperse Form bei den genannten Temperaturen von 50 bis 150 °C, vorzugsweise 80 bis 140 °C, ganz besonders bevorzugt 90 bis 120 °C, durchgeführt wird, erfolgt dabei gleichzeitig auch eine Umwandlung der färbeinstabilen α-Modifikation des Farbstoffs der Formel I in die färbestabile β-Modifikation des Farbstoffs der Formel I.

Bei der Feinverteilung werden die Farbstoff-Teilchen mechanisch so weit zerkleinert, bis eine optimale spezifische Oberfläche erreicht und die Sedimentation der Farbstoffteilchen möglichst gering ist. Die Größe der Farbstoffteilchen liegt im allgemeinen bei etwa 0,1 bis 10 μm.

Die färbestabile β-Modifikation des Farbstoffs I wird vor der Anwendung des Farbstoffs noch in üblicher Weise in eine hohe Feinverteilung überführt. Die Überführung in eine hohe Feinverteilung erübrigt sich, falls die erhaltene färbestabile β-Modifikation bereits in hoher Feinverteilung vorliegt, was dann der Fall ist, wenn die färbeinstabile α-Modifikation im Verlauf einer Überführung in hohe Feinverteilung auf Temperaturen von 80 bis 140 °C erhitzt worden ist.

Die in hohe Feinverteilung überführte oder vorliegende färbestabile neue β-Modifikation des Farbstoffs der Formel I eignet sich vorzüglich zum Färben und Bedrucken von synthetischem, hydrophobem Fasermaterial und Mischungen dieser Fasermaterialien mit Cellulosefasern bei Temperaturen von etwa 95 bis 220 °C. Der Farbstoff kann dabei als Einzelfarbstoff oder in Mischung mit anderen Farbstoffen, vorzugsweise im Gemisch mit den Farbstoffen C.I. Disperse Yellow 54 und/oder Disperse Yellow 64 eingesetzt werden. Bevorzugte hydrophobe Fasermaterialien sind solche aus aromatischen Polyestern und Celluloseestern, insbesondere Polyestern. Sie liefert hierauf nach den üblichen Färbe- und Druckverfahren farbstarke gelbe Färbungen und Drucke mit sehr guten Echtheitseigenschaften, insbesondere guter Lichtechtheit, sehr gutem Aufbauvermögen, sehr guter Thermomigration und sehr gutem Egalisiervermögen. Die neue färbestabile β-Modifikation hat nicht die Nachteile der färbeinstabilen α-Modifikation die bei Färbeverfahren, bei denen sie längere Zeit im wäßrigen Medium, gegebenenfalls in Gegenwart von Hilfsmitteln, einer höheren Temperatur ausgesetzt ist, zu Farbstoffausfällungen und somit zu Abfiltrationen führt. Die erfindungsgemäße färbestabile β-Modifikation eignet sich daher insbesondere im Gemisch mit den Farbstoffen C.I. Disperse Yellow 54 und/oder Disperse Yellow 64 auch hervorragend zum Färben von Wickelkörpern, insbesondere von Kreuzspulen bei Kochtemperatur unter Zusatz von Carriern oder nach dem HT-Verfahren.

In den nachfolgbenden Beispielen bedeuten die Teile Gewichtsteile.

Beispiel 1

107 Teile p-Toluidin werden in einem Gemisch aus 600 Teilen Wasser und 287,5 Teilen konzentrierter Salzsäure unter Zusatz von 600 Teilen Eis mit 190 Teilen 40 %iger, wäßriger Natriumnitrit-Lösung diazotiert. Die klare Diazolösung läßt man in 1 h bei 50 °C zu einer Lösung von 150 Teilen 3-Cyan-4-methyl-6-hydroxy-2-pyridon in 500 Teilen Wasser und 184 Teilen 50 %iger Natronlauge laufen, gibt dann zu der so erhaltenen Dispersion der färbeinstabilen α-Modifikation des Farbstoffs I 3 Teile Diethylenglykol, stellt mit 50 Teilen konz. Salzsäure auf pH 7,5 und rührt die Suspension 5 h bei 120 °C, kühlt auf 50 °C ab und filtriert. Man erhält 241 Teile (60 % der Theorie) der färbestabilen β-Modifikation des Farbstoffs der Formel I

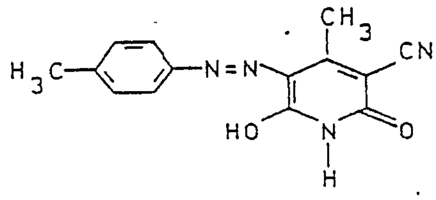

(I)

als orangene Kristalle vom Fp : 282 °C.

Beispiel 2

100 Teile des nach dem Beispiel 1 der DE-OS 29 31 847 erhaltenen färbeinstabilen α-Modifikation werden aus 17 000 Teilen Chlorbenzol umkristallisiert. Man erhält 92 Teile der färbestabilen β-Modifikation vom Fp : 283 °C.

Beispiel 3

100 Teile des nach dem Beispiel 1 der DE-OS 29 31 847 erhaltenen färbeinstabilen α-Modifikation werden mit 2703 Teilen Wasser und 297 Teilen Chlorbenzol 1 h am Rückfluß erhitzt. Dann destilliert man das Chlorbenzol mit Wasserdampf ab, kühlt auf 50 °C ab und filtriert.

Man erhält 93 Teile der färbestabilen β-Modifikation vom Fp : 279 °C.

Beispiel 4

1,0 g der nach Beispiel 1 erhaltenen färbestabilen β-Modifikation werden in einer Perlmühle unter Zusatz der doppelten Menge eines handelsüblichen Dispergiermittels aus der Reihe der Ligninsulfonate fein dispergiert und dann in 2 000 g Wasser eingerührt. Die Dispersion wird mit 4,0 g Ammoniumsulfat und 2,0 g eines handelsüblichen Dispergiermittels auf Basis eines Naphthalinsulfonsäure-Formaldehyd-Kondensats versetzt und mit Essigsäure auf einen pH-Wert von 5 eingestellt.

In die so erhaltene Färbeflotte bringt man 100 g eines Polyestergewebes auf Basis von Polyethylenglykolterephthalat ein und färbt 1 h bei 130 °C.

Nach anschließendem Spülen, reduktiver Nachbehandlung mit einer mit Natronlauge auf pH 10 bis 11 gestellten 0,2 %igen Natriumdithionitlösung während 15 min bei 70 bis 80 °C, nochmaligem Spülen und Trocknen, erhält man eine klare farbstarke gelbe Färbung mit sehr guten coloristischen Eigenschaften.

Verwendet man anstelle der färbestabilen β-Modifikation des Beispiels 1 die färbestabile β-Modifikation der Beispiele 2 und 3, dann erhält man identische Ergebnisse.

Beispiel 5

30 g der nach Beispiel 1, 2 oder 3 erhaltenen färbestabilen β-Modifikation werden in feiner Verteilung einer Druckpaste, die 45 g Johannisbrotkernmehl, 6,0 g 3-Nitrobenzolsulfonsaures Natrium und 3,0 g Zitronensäure auf 1 000 g enthält, einverleibt. Mit dieser Druckpaste erhält man auf einem Polyestergewebe nach dem Bedrucken, Trocknen und Fixieren im Thermofixierrahmen während 45 sek bei 215 °C, Spülen und Fertigstellung, wie in Beispiel 4 beschrieben, einen farbstarken, gelben Druck mit sehr guten coloristischen Eigenschaften, insbesondere sehr guter Licht-, Trockenhitzeplissier- und Trockenhitzefixierechtheit.

Beispiel 6

Ein Gewebe aus Polyethylenglykolterephthalat wird auf dem Foulard bei 30 °C mit einer Flotte geklotzt, die 30 Gewichtsteile der nach Beispiel 1, 2 oder 3 erhaltenen und in feiner Verteilung gebrachten färbestabilen β-Modifikation, 1,0 g Polyacrylamid vom K-Wert 120 und 0,5 Gewichtsteile eines Polyglykolethers des Oleylalkohols und 968,5 g Wasser enthält. Nach dem Trocknen wird 60 sek bei 215 °C im Thermofixierrahmen fixiert. Nach anschließendem Spülen und Fertigstellung, wie im Beispiel 4 beschrieben, erhält man eine brillante gelbe Färbung von sehr guten Echtheitseigenschaften.

Beispiel 7

0,3 g der nach Beispiel 1, 2 oder 3 erhaltenen färbestabilen β-Modifikation des Farbstoffs der Formel I und 0,7 g C.I. Disperse Yellow 54 werden in einer Perlmühle unter Zusatz der doppelten Menge eines handelsüblichen Dispergiermittels aus der Reihe der Ligninsulfonate fein dispergiert und dann in 2 000 g Wasser eingerührt. Die Dispersion wird mit 2,0 g Natriumacetat, 2,0 g eines handelsüblichen Dispergiermittels auf Basis eines Naphthalinsulfonsäure-Formaldehyd-Kondensats und 5 g eines handelsüblichen Carriers auf der Basis Diphenyl versetzt und mit Essigsäure auf einen pH-Wert von 5 eingestellt.

Die so erhaltene Färbeflotte erwärmt man auf 60 °C und bringt 100 g eines Polyestergewebes auf Basis von Polyethylenglykolterephthalat ein und steigert die Temperatur innerhalb von 30 min auf 98 bis 100 °C und färbt 60 min bei dieser Temperatur.

Dann kühlt man ab und behandelt die Färbung nach, wie in Beispiel 4 angegeben. Man erhält bei hoher Baderschöpfung eine brillante Gelbfärbung mit sehr guten coloristischen Eigenschaften, insbesondere sehr guter Lichtechtheit.

Ersetzt man im vorliegenden Beispiel den Farbstoff C.I. Disperse Yellow 54 durch den Farbstoff C.I. Disperse Yellow 64, dann erhält man ein ähnlich gutes Ergebnis. Ähnlich gute Ergebnisse erhält man auch bei anderen Gewichtsverhältnissen zwischen der färbestabilen β-Modifikation des Farbstoffs der Formel I und des Farbstoffs C.I. Disperse Yellow 54 und/oder 64, insbesondere bei Gewichtsverhältnissen von 1 : (2 bis 20).

**Patentansprüche**

1. Färbestabile β-Modifikation des Farbstoffs der Formel I

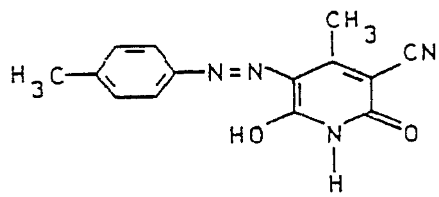

(I)

mit dem Röntgenbeugungsdiagramm für Kupfer-Kα-Strahlung mit folgenden Linien starker Intensität bei Beugungswinkel 2 θ von 13,40° ; Linien mittlerer Intensität bei Beugungswinkel 2 θ von 9,20° ; 11,15° und 25,80° ; Linien geringer Intensität bei Beugungswinkel 2 θ von 14,70°, 15,70° ; 21,65°, 25,00°, 26,85°, 28,05° und 29,10°.

2. Verfahren zur Herstellung der in Anspruch 1 angegebenen färbestabilen β-Modifikation des Farbstoffs der Formel I, dadurch gekennzeichnet, daß die färbeinstabile α-Modifikation des Farbstoffs der Formel I auf Temperaturen von 50 bis 150 °C erhitzt wird.

3. Verfahren nach Anspruch 2, dadurch gekennzeichnet, daß die färbeinstabile α-Modifikation auf Temperaturen von 80 bis 140 °C erhitzt wird.

4. Verfahren nach den Ansprüchen 2 oder 3, dadurch gekennzeichnet, daß die färbeinstabile α-Modifikation auf Temperaturen von 90 bis 120 °C erhitzt wird.

5. Verfahren nach einem oder mehreren der Ansprüche 2 bis 4, dadurch gekennzeichnet, daß die färbeinstabile α-Modifikation in einer Flüssigkeit oder einem Flüssigkeitsgemisch suspendiert und in Form der Suspension erhitzt wird.

6. Verfahren nach einem oder mehreren der Ansprüche 2 bis 5, dadurch gekennzeichnet, daß die färbeinstabile α-Modifikation in Form der bei der Farbstoffsynthese anfallenden Suspension erhitzt wird.

7. Verfahren nach einem oder mehreren der Ansprüche 2 bis 6, dadurch gekennzeichnet, daß die färbeinstabile α-Modifikation umkristallisiert wird.

8. Verfahren nach einem oder mehreren der Ansprüche 2 bis 7, dadurch gekennzeichnet, daß die färbeinstabile α-Modifikation in Gegenwart von Dispergiermittel und/oder Emulgatoren und/oder Netzmittel und/oder Lösungsmittel, insbesondere Chlorbenzol, erhitzt wird.

9. Verfahren nach einem oder mehreren der Ansprüche 2 bis 8, dadurch gekennzeichnet, daß die färbeinstabile α-Modifikation im Verlauf der Überführung in eine hohe Feinverteilung erhitzt wird.

10. Verwendung der im Anspruch 1 genannten färbestabilen β-Modifikation, insbesondere im Gemisch mit den Farbstoffen C.I. Disperse Yellow 54 und/oder C.I. Disperse Yellow 64, zum Färben und Bedrucken von synthetischem, hydrophobem Fasermaterial oder von Gemischen dieser Fasermaterialien mit Cellulosefasern.

**Claims**

1. Dyeing-stable β-modification of the dyestuff of the formula I

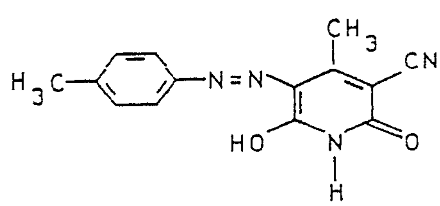

(I)

having an x-ray diffraction diagram for copper-K$\alpha$ radiation with the following lines of high intensity at a diffraction angle 2 $\theta$ of 13.40° ; lines of medium intensity at a diffraction angle 2 $\theta$ of 9.20°, 11.15° and 25.80° ; and lines of low intensity at a diffraction angle 2 $\theta$ of 14.70°, 15.70°, 21.65°, 25.00°, 26,85°, 28.05° and 29.10°.

2. Process for preparing the dyeing-stable $\beta$-modification of the dyestuff of the formula I specified in Claim 1, characterised in that the dyeing-unstable $\alpha$-modification of the dyestuff of the formula I is heated to temperatures from 50 to 150 °C.

3. Process according to Claim 2, characterised in that the dyeing-unstable $\alpha$-modification is heated to temperatures from 80 to 140 °C.

4. Process according to Claim 2 or 3, characterised in that the dyeing-unstable $\alpha$-modification is heated to temperatures from 90 to 120 °C.

5. Process according to one or more of Claims 2 to 4, characterised in that the dyeing-unstable $\alpha$-modification is suspended in a liquid or mixture of liquids and is heated in the form of the suspension.

6. Process according to one or more of Claims 2 to 5, characterised in that the dyeing-unstable $\alpha$-modification is heated in the form of the suspension obtained in the course of the dyestuff synthesis.

7. Process according to one or more of Claims 2 to 6, characterised in that the dyeing-unstable $\alpha$-modification is recrystallised.

8. Process according to one or more of Claims 2 to 7, characterised in that the dyeing-unstable $\alpha$-modification is heated in the presence of dispersants and/or emulsifiers and/or wetting agents and/or solvents, in particular chlorobenzene.

9. Process according to one or more of Claims 2 to 8, characterised in that the dyeing-unstable $\alpha$-modification is heated in the course of the conversion into a highly disperse form.

10. Use of the dyeing-stable $\beta$-modification mentioned in Claim 1, in particular in mixture with the dyestuffs C.I. Disperse Yellow 54 and/or C.I. Disperse Yellow 64, for dyeing and printing synthetic, hydrophobic fibre material or mixtures of these fibre materials with cellulose fibres.

**Revendications**

1. Modification-$\beta$, à couleur stable, du colorant de formule I :

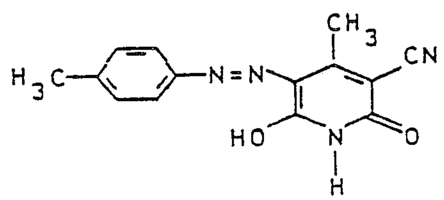

(I)

dont le diagramme de diffraction des rayons X pour la radiation K$\alpha$ du cuivre présente une raie très intense à l'angle de diffraction 2 $\theta$ de 13,40°, des raies d'intensité moyenne aux angles de diffraction 2 $\theta$ de 9,20° ; 11,15° et 25,80° ; et des raies peu intenses aux angles de diffraction 2 $\theta$ de 14,70° ; 15,70° ; 21,65° ; 25,00°, 26,85° ; 28,05° et 29,10°.

2. Procédé pour préparer la modification-$\beta$, à couleur stable, du colorant de formule I qui a été définie à la revendication 1, procédé caractérisé en ce qu'on chauffe la modification-$\alpha$, à couleur instable, du colorant de formule I à des températures de 50 à 150 °C.

3. Procédé selon la revendication 2, caractérisé en ce qu'on chauffe la modification-$\alpha$ à couleur instable à des températures de 80 à 140 °C.

4. Procédé selon l'une des revendications 2 et 3, caractérisé en ce qu'on chauffe la modification-$\alpha$, à couleur instable, à des températures de 90 à 120 °C.

5. Procédé selon une ou plusieurs des revendications 2 à 4, caractérisé en ce qu'on met la modification-$\alpha$ à couleur instable en suspension dans un liquide ou dans un mélange de liquides et en ce qu'on la chauffe sous la forme de la suspension.

6. Procédé selon une ou plusieurs des revendications 2 à 5, procédé caractérisé en ce que la modification-$\alpha$ à couleur instable est chauffée sous la forme de la suspension que l'on obtient dans la synthèse du colorant.

7. Procédé selon une ou plusieurs des revendications 2 à 6, caractérisé en ce qu'on recristallise la modification-$\alpha$ à couleur instable.

8. Procédé selon une ou plusieurs des revendications 2 à 7, caractérisé en ce qu'on chauffe la modification-$\alpha$ à couleur instable en présence d'un dispersant et/ou d'un émulsionnant et/ou d'un mouillant et/ou d'un solvant, en particulier de chlorobenzène.

9. Procédé selon une ou plusieurs des revendications 2 à 8, caractérisé en ce qu'on chauffe la modification-$\alpha$ à couleur instable au cours de la transformation de celle-ci en un produit très finement divisé.

10. Application de la modification-β à couleur stable qui a été définie à la revendication 1, plus particulièrement en mélange avec les colorants C.I. Disperse Yellow 54 et/ou C.I. Disperse Yellow 64, pour la teinture et l'impression d'une matière fibreuse synthétique hydrophobe ou de mélanges de matières fibreuses de ce genre avec des fibres cellulosiques.